**Europäisches Patentamt**

**European Patent Office**

**Office européen des brevets**

(11) Veröffentlichungsnummer : **0 484 275 A1**

(12) **EUROPÄISCHE PATENTANMELDUNG**

(21) Anmeldenummer : **91810798.8**

(22) Anmeldetag : **17.10.91**

(51) Int. Cl.⁵ : **B32B 27/40, B65D 65/40**

(30) Priorität : **30.10.90 CH 3451/90**

(43) Veröffentlichungstag der Anmeldung :
**06.05.92 Patentblatt 92/19**

(84) Benannte Vertragsstaaten :
**AT BE CH DE DK ES FR GB GR IT LI LU NL SE**

(71) Anmelder : **ALUSUISSE-LONZA SERVICES AG**
**Feldeggstrasse 4**
**CH-8034 Zürich (CH)**

(72) Erfinder : **Muggli, Olivier Y.**
**Schwanenfelsstrasse 12a**
**CH-8212 Neuhausen am Rheinfall (CH)**
Erfinder : **Wehrli, Andreas**
**Lächenstrasse 12**
**CH-8247 Flurlingen (CH)**

(54) **Verbundlaminat.**

㊏ Mehrschichtiges flexibles Verbundlaminat mit wenigstens einer Sperrschicht gegen Wasserdampf und Gase und beidseitig der Sperrschicht je einer Kunststoffschicht. Die Sperrschicht ist eine Metall-Folie, eine Kunststofffolie mit einer Keramik-Schicht oder einer metallischen Schicht und von den beidseitig der Sperrschicht befindlichen Kunststoffschichten enthält oder besteht eine Schicht aus einem thermoplastischen Urethan.

EP 0 484 275 A1

Vorliegende Erfindung betrifft ein mehrschichtiges flexibles Verbundlaminat mit wenigstens einer Sperrschicht gegen Wasserdampf und Gase und beidseitig der Sperrschicht oder der Sperrschichten je einer Kunststoffschicht und dessen Verwendung.

Aus der EP-A 0 203 265 ist eine mehrschichtige Bahnstruktur bekannt, deren Schichten fest aneinander haften und eine einheitliche Struktur bilden, worin die Schichten in der Reihenfolge enthalten sind:

a) eine Schicht eines LLDPE (linear low density polyethylen), die eine verbesserte Spannungsrissfestigkeit ergibt,

b) eine erste Kleberschicht

c) eine Sperrschicht aus einer Metallfolie

d) eine zweite Kleberschicht und

e) eine Polyethylenschicht.

Solche Bahnstrukturen sind zur Herstellung von Tuben geeignet und weisen gemäss Beschreibung eine erhöhte Rissfestigkeit auf.

Oft sind die mechanischen Belastungen oder andere Anforderungen zu hoch, um mit bekannten Verbundlaminaten alle Forderungen zu erfüllen.

Beispielsweise werden die Barriereschichten oder Sperrschichten durch Biegen, Plissieren, Falten, Tordieren oder während dem Gebrauch veletzt, so dass kleine Poren oder Mikrorisse entstehen, welche die Barriere-Wirkung beeinträchtigen. Schliesslich kann dies zu einer Schädigung des Füllgutes führen.

Aufgabe vorliegender Erfindung ist es, die beschriebenen Nachteile zu vermeiden und ein Verbundlaminat zur Verfügung zu stellen, das unabhängig von der Barriere- oder Sperrschicht insbesondere eine hohe Knick-Beständigkeit hat.

Erfindungsgemäss wird das durch ein mehrschichtiges flexibles Verbundlaminat erreicht, dessen Sperrschicht bzw. Sperrschichten eine Metall-Folie, eine Keramikschicht oder eine metallisierte Schicht darstellen und wenigstens eine der beidseitig der Sperrschicht bzw. Sperrschichten befindlichen Kunststoffschichten eine Schicht eines thermoplastischen Urethans enthalten oder daraus bestehen.

Das mehrschichtige flexible Verbundlaminat nach vorliegender Erfindung enthält zweckmässig eine Sperrschicht und einseitig der Sperrschicht eine Kunststoffschicht.

Zweckmässig ist ein Verbundlaminat nach vorliegender Erfindung, enthaltend eine Sperrschicht, das einseitig der Sperrschicht oder beidseitig der Sperrschicht je eine Schicht eines thermoplastischen Urethans enthält.

Das mehrschichtige flexible Verbundlaminat nach vorliegender Erfindung kann an einer oder beiden Aussenflächen eine Siegelschicht bzw. Siegelschichten oder eine siegelbare Schicht bzw. siegelbare Schichten aufweisen.

Als Sperrschichten können z.B. Metallfolien, beispielsweise aus Aluminium, Aluminiumlegierungen, Kupfer oder Zinn angewendet werden.

Bevorzugt wird eine Folie aus Aluminium oder Aluminiumlegierungen, wobei Aluminium einer Reinheit von z.B. 96% und höher, zweckmässig 98,6% und höher und insbesondere 99,6% und höher bevorzugt angewendet wird. Die Aluminiumfolien sollen zweckmässig besonders flexibel, feinkörnig und/oder texturfrei sein. Die bevorzugten Aluminiumlegierungen für die genannten Folien sind solche des Types AA 8079 oder AA 8101.

Die Dicke der Folien aus Aluminium oder Aluminiumlegierungen beträgt z.B. 3 bis 50 $\mu$m, zweckmässig 4 bis 20 $\mu$m und bevorzugt 8 bis 12 $\mu$m.

Andere Sperrschichten, insbesondere Keramikschichten, enthalten beispielsweise Oxide aus der Reihe der Siliciumoxide, der Aluminiumoxide, der Eisenoxide, der Nickeloxide der Chromoxide oder der Bleioxide oder Gemische davon.

Als Keramikschichten sind die Siliciumoxide oder Aluminiumoxide zweckmässig. Die Siliciumoxide können die Formel $SiO_x$, wobei x bevorzugt eine Zahl von 1 bis 2, besonders bevorzugt von 1,1 bis 1,9 und insbesondere von 1,2 bis 1,7 darstellt, aufweisen. Die Aluminiumoxide können die Formel $Al_yO_z$, wobei y/z z.B. eine Zahl von 0,2 bis 1,5 und bevorzugt von 0,65 bis 0,85 darstellt, aufweisen.

Die Keramikschicht wird beispielsweise durch eine Vakuumdünnschichttechnik, zweckmässig auf der Basis von Elektronenstrahlverdampfen oder Widerstandsheizen oder induktivem Heizen aus Tiegeln, z.B auf eine Kunststoffschicht, aufgebracht. Bevorzugt ist das Elektronenstrahlverdampfen. Die beschriebenen Verfahren können reaktiv und/oder mit Ionenunterstützung gefahren werden.

Kunststoffschichten, die als Träger für keramische Schichten oder metallische Schichten geeignet sind, können nachfolgender Beschreibung für Folien oder Folienverbunde aus Thermoplasten auf Olefin-Basis, Ester-Basis oder Polyamid-Basis entnommen werden. Bevorzugt sind Polyesterfolien und CVD/PE CVD-Folien.

Die Dicke der Keramikschicht kann von 5 bis 500 nm betragen, wobei Schichtdicken von 10 bis 200 nm bevorzugt und von 40 bis 150 nm besonders bevorzugt sind.

Die Sperrschichten können auch eine metallische Schicht darstellen. Beispiele von metallischen Schichten sind Aluminiumschichten oder Kupferschichten. Metallische Schichten werden in der Regel durch Sputtern oder Aufdampfen z.B. auf eine Kunststoffschicht aufgebracht.

Die Kunststoffschichten können aus einer einfachen Folie, aus Folienverbunden oder Laminaten bestehen. Die Kunststoffschichten können nachfolgender Beschreibung für Folien oder Folienverbunde aus Thermoplasten entnommen werden, wobei z.B. die Kunststoffe auf Olefin-Basis, auf Ester-Basis, auf Polyamid-Basis oder halogenhaltige Kunststoffe zweckmässig sind.

Metallische Schichten sind beispielsweise 5 bis 500 nm, zweckmässig 10 bis 200 nm und vorzugsweise 40 bis 150 nm dick.

Bei einzelnen Folien oder Folienverbunde weisen beispielsweise eine Dicke im Bereich von 8 bis 100 μm, zweckmässig 10 bis 70 μm und bevorzugt von 10 bis 50 μm auf.

Beispiele für Thermoplaste auf Olefin-Basis sind Polyolefine, wie Polyethylen, wie Polyethylen hoher Dichte (HDPE, Dichte grösser als 0,944 g/cm³), Polyethylen mittlerer Dichte (MDPE, Dichte 0,926-0,940 g/cm³), lineares Polyethylen mittlerer Dichte (LMDPE, Dichte 0,926-0,940 g/cm³), Polyethylen niedriger Dichte (LDPE, Dichte 0,910-0,925 g/cm³) und lineares Polyethylen niedriger Dichte (LLDPE, Dichte 0,916-0,925 g/cm³), Polypropylen, Poly-1-buten, Poly-3-methylbuten, Poly-4-methylpenten und Copolymere oder Coextrudate davon, wie z.B. von Polyethylen mit Vinylacetat, Acrylsäure, Methacrylsäure, Acrylestern, Tetrafluorethylen oder Polypropylen, sowie statistische Copolymere, Block-Copolymere oder Olefinpolymer-Elastomer-Mischungen.

Thermoplaste auf Ester-Basis sind beispielsweise Polyalkylenterephthalate oder Polyalkylenisophthalate mit Alkylengruppen oder -resten mit 2 bis 10 Kohlenstoffatomen oder Alkylengruppen mit 2 bis 10 C-Atomen, die wenigstens durch ein -0- unterbrochen sind, wie z.B. Polyethylenterephthalat, Polypropylenterephthalat, Polybutylenterephthalat (Polytetramethylenterephthalat), Polydecamethylenterephthalat, Poly-1,4-cyclohexyldimethylolterephthalat oder Polyethylen-2,6-naphthalen-dicarboxylat oder Polyalkylenterephthalat- und Poly-alkylenisophthalat-Mischpolymere, wobei der Anteil an Isophthalat z.B. 1 bis 10 Mol-% beträgt, Mischpolymere und Terpolymere, sowie Blockpolymere und gepfropfte Modifikationen oben genannter Stoffe.

Zweckmässig sind die Thermoplaste auf Ester-Basis Polyalkylenterephthalate mit Alkylengruppen oder-resten mit 2 bis 10 Kohlenstoffatomen und Polyalkylenterephthalate, mit Alkylengruppen oder- resten mit 2 bis 10 Kohlenstoffatomen, die durch ein oder zwei -0- unterbrochen sind.

Bevorzugt sind als Thermoplaste auf Ester-Basis Polyalkylenterephthalate mit Alkylengruppen oder -resten mit 2 bis 4 Kohlenstoffatomen und ganz besonders bevorzugt sind Polyethylenterephthalate.

Zu den Thermoplasten auf Amid-Basis gehören beispielsweise Polyamid 6, ein Homopolymerisat aus ε-Caprolactam (Polycaprolactan); Polyamid 11, ein Polykondensat aus 11-Aminoundecansäure (Poly-11-aminoundecanamid);
Polyamid 12, ein Homopolymerisat aus w-Laurinlactam (Polylaurinlactam); Polyamid 6,6, ein Homopolykondensat aus Hexamethylendiamin und Adipinsäure (Polyhexamethylenadipamid); Polyamid 6,10, ein Homopolykondensat aus Hexamethylendiamin und Sebacinsäure (Polyhexamethylensebacamid); Polyamid 6,12, ein Homopolykondensat aus Hexamethylendiamin und Dodecandisäure (Polyhexamethylendodecanamid) oder Polyamid 6-3-T, ein Homopolykondensat aus Trimethylhexamethylendiamin und Terephthalsäure (Polytrimethylhexamethylenterephthalamid), sowie Gemische davon.

Eine beispielhafte Aufzählung von halogenhaltigen Kunststoffen beinhaltet beispielsweise die Polymere des Vinylchlorids und Vinylkunststoffe enthaltend Vinylchlorideinheiten in deren Struktur, z.B. Copolymere des Vinylchlorids mit Vinylestern von alphalischen Säuren, insbesondere von Vinylacetat; Copolymere von Vinylchlorid mit Estern der Acryl- und Methacrylsäure und mit Acrylonitril; Copolymere von Vinylchlorid mit Dien-Verbindungen und ungesättigten Dicarboxylsäuren oder deren Anhydride, wie Copolymere des Vinylchlorids mit Diethylmaleat, Diethylfumarat oder Maleinanydrid; nachchlorierte Polymere und Copolymere des Vinylchlorids; Copolymere des Vinylchlorids und Vinylidenchlorids mit ungesättigten Aldehyden, Ketonen und anderen, wie Acrolein, Crotonaldehyd, Vinylmethylketon, Vinylmethylether, Vinylisobutylether usw.; Polymere des Vinylidenchlorides und Copolymere desselben mit Vinylchlorid und anderen polymerisierbaren Verbindungen; Polymere des Vinylchloracetates and Dichlorvinylethers, chlorierte Polymere des Vinylacetates, chlorierte polymerische Ester der Acrylund alphasubstituierten Acrylsäuren; Polymere von chlorierten Styrolen, z.B. Dichlorstyrol, chlorierter Gummi, chlorierte Polymere des Chlorbutadiens und deren Copolymere mit Vinylchlorid; Gummihydrochloride und chlorierte Gummihydrochloride; sowie Mischungen der genannten Polymere untereinander oder mit anderen polymerisierbaren Verbindungen und ferner die entsprechenden Bromide und Fluoride.

In der Praxis werden die Kunststoffschichten unter sich, oder im Falle von Folienverbunden oder Laminaten, auch zwischen diesen Verbunden Kaschierkleber und/oder Haftvermittler angewendet. Geeignete Haftvermittler sind beispielsweise Vinylchlorid-Copolymerisate, Vinylchlorid-Vinylacetat-Copolymerisate, polymerisierbare Polyester, Vinylpyridin-Polymerisate, Vinylpyridin-Polymerisate in Kombination mit Epoxidharzen, Butadien-Acrylnitril-Methacrylsäure-Copolymerisate, Phenolharze, Kautschukderivate, Acrylharze, Acrylharze mit Phenol bzw. Epoxidharzen, oder siliciumorganische Verbindungen, wie Organosilane.

Beispiele für Organosilane sind Alkyltrialkoxysilane mit Aminofunktionsgruppe, Alkyltrialkoxysilane mit Epoxyfunktionsgruppe, Alkyltrialkoxysilane mit Esterfunktionsgruppe, Alkyltrialkoxysilane mit aliphatischer Funktionsgruppe, Alkyltrialkoxysilane mit Glycidoxyfunktionsgruppe, Alkyltrialkoxysilane mit Methacryloxyfunktionsgruppe, sowie Gemische derselben. Beispiele solcher Organosilane sind γ-Aminopropylentriethoxysilan und N-β-(Aminoethyl-γ-aminopropyltrimethoxysilan, γ -(3,4-Epoxycyclohexyl)-ethyltrimethoxysilan, γ -Glycidoxypropyltrimethoxysilan, und γ-Methacryloxypropyltrimethoxysilan. Diese Verbindungen sind in der Fachwelt an sich bekannt.

Bevorzugt werden EAA (Ethylenacrylsäure) oder modifizierte Polyolefine.

Beispiele von modifizierten Polyolefinen sind säuremodifizierte Polyolefine und demnach Kunststoffe, gebildet durch Pfropfmodifikation eines Polyolefins mit ethylenisch ungesettigten Carboxylsäuren oder deren Anhydriden. Als Basispolymere der Polyolefine können z.B. Polyethylen niedriger Dichte, Polyethylen mittler Dichte, Polyethylen hoher Dichte, lineares Polyethylen niedriger Dichte, Homopolypropylen, Ethylen-Propylen-Copolymere, Polybuten-1, Polypenten-1, Buten-1-Propylen, Copolymere und Buten-1-Propylene-Ethylen-Terpolymere genannt werden. Bevorzugt sind Homopolypropylen und Ethylen-Propylen-Copolymere.

Beispiele für die ethylenisch ungesättigte Carboxylsäuren oder deren Anhydride sind Acrylsäure, Methacrylsäure, Maleinsäure, Fumarsäure, Krotonsäure, Itaconsäure, Citraconsäure, 5-Norbornen-2,3-dicarboxylsäure, Maleinsäureanhydrid, Citraconsäure-anhydrid, 5-Norbornen-2,3-dicarboxylsäureanhydrid und Tetrahydrophtalsäureanhydrid. Maleinsäureanhydrid ist dabei bevorzugt. Bevorzugt ist eine Säuregruppen-Gehalt in den säuremodifizierten Polyolefinen von 0,01 bis 600 meg/100g Kunststoff und bevorzugt 10 bis 200 meg/100g Kunststoff, gerechnet als Carboxylgruppen (=CO).

Das bevorzugte modifizierte Polypropylen ist ein Addukt aus Maleinsäureanhydrid und einen Ethylen-Propylen-Copolymer. Ganz besonders bevorzugt werden Dispersionen von modifizierten Polyolefinen. Ein Beispiel einer Dispersion eines modifizierten Polypropylens ist Morprime (Markenname der Firma Morton Chemical Division of Norton Norwich Products, Inc.).

Weitere geeignete Haftvermittler sind Klebstoffe wie Nitrilkautschuk-Phenolharze, Epoxide, Acrylnitril-Butadien-kautschuk, urethanmodifizierte Acryle, Polyester-co-Polyamide, Heissschmelzpolyester, mit Heissschmelzpolyester vernetzte Polyisocyanate, polyisobutylenmodifizierte Styrol-Butadien-kautschuke, Urethane, Ethylen-Acrylsäure-Mischpolymere und Ethylenvinylacetat-Mischpolymere.

Werden beispielsweise zwischen den Kunststoffschichten Kaschierkleber angewendet, so können die Kaschierkleber lösungsmittelhaltig oder lösungsmittelfrei und auch wasserhaltig sein. Beispiele sind lösungsmittelhaltige oder wässrige Acrylatkleber oder lösungsmittelfreie Polyurethan-Kleber.

Bevorzugt werden Kaschierkleber auf Polyurethan-Basis.

Nach vorliegender Erfindung enthalten die Verbundlaminate wenigstens eine Folie eines thermoplastischen Urethans. Thermoplastische Urethane sind beispielsweise Vernetzungsprodukte enthaltend Urethanen aus Urethanen und Polyestern oder auf Basis von Urethanen und/oder Polyestern. In der Regel zeigen sie hohe Zähigkeit und Flexibilität.

Zweckmässig weisen die thermoplastischen Urethane eine Shore-A-Härte von über 70 und bevorzugt von 70 bis 120 auf. Die thermoplastischen Urethane sind vorzugsweise gummielastisch.

In der Regel weisen die Folien aus den thermoplastischen Urethanen eine Dicke im Bereich von 10 bis 100 μm, zweckmässig von 20 bis 70 μm auf und vorzugsweise von 20 bis 50 μm auf.

In der Praxis weisen thermoplastische Urethane mit Bruchdehnungswerten von beispielsweise 400 bis 700% mit einer Zugfestigkeit von 400 bis 900 N/cm$^2$ auf.

Die Rückprallelastizität der thermoplastischen Urethane nach BS 903/Part A8 beträgt vorteilhaft 70% und höher.

Die thermische Stabilität der angewendeten thermoplastischen Urethane liegt vorteilhaft bei Temperaturen von über 160°C, wobei als obere Grenze 220°C gesetzt werden können, so dass bei Heissiegelungen keine Beschädigungen auftreten.

Typische Beispiele von Verbundlaminaten nach vorliegender Erfindung sind aufgebaut, von aussen nach innen, aus

gegebenenfalls eine Siegelschicht a), z.B. in einer Dicke im Bereich von 1 bis 100 μm;

einer Folie b) eines thermoplastischen Polyurethans mit deiner Dicke im Bereich von 20 bis 50 μm;

einer Folie oder eines Folienverbundes c) aus einem Polyester, wie Polyethylenterephthalat, einem Polyamid oder einem Polyolefin, wie Polyethylen, Polypropylen und insbesondere hochdichtes Polyethylen (HDPE, high density polyethylene), wobei die Polyamide und Polyolefine vorzugsweise in wenigstens einer Richtung orientiert sind, mit einer Dicke von 10 bis 20 μm;

einer Sperrschicht d), z.B. aus einer Aluminium-Folie einer Dicke im Bereich von 8 bis 12 μm und einer Reinheit des Aluminiums von grösser als 98,6% und insbesondere grösser als 99%,

oder aus einer Folie,

beispielsweise aus einer Polyethylenterephthalatfolie, einer orientierten Polyamid- oder Polypropylenfolie oder Polyethylenfolie, die wenigstens einseitig mit einer keramischen Beschichtung, vorzugsweise einer $SiO_x$-Schicht, wie vorstehend beschrieben, oder einer metallischen Schicht, wie vorstehend beschrieben, versehen ist; und

einer Siegelschicht e), beispielsweise aus linearem Polyethylen niedriger Dichte (LLDPE, linear low density poly ethylene), Polyethylen niedriger Dichte (LDPE, low density poly ethylene), Polyethylen mittlerer Dichte (MDPE, medium density poly ethylene), Polypropylen, oder Polyethylenterephthalat, z.B. in einer Dicke im Bereich von 1 bis 100 µm, zweckmässig 10 bis 70 µm und bevorzugt 30 bis 50 µm.

Zwischen den einzelnen Schichten, demnach zwischen a) und b), b) und c), c) und d) und/oder d) und e) kann sich beispielsweise ein Haftvermittler und/oder ein Kaschierkleber, insbesondere auf Polyurethanbasis, befinden.

Bevorzugt ist zwischen den Schichten b) und c) und c) und d) ein Kaschierkleber und zwischen den Schichten a) und b) und d) und e) ein Haftvermittler, beispielsweise EAA (Ethylenacrylsäure) oder eine Polypropylen-Dispersion (z.B. Morprime).

Die Kaschierkleber werden beispielsweise in Mengen von 1 bis 6 g/m$^2$ und vorzugsweise 2 bis 4 g/m$^2$ angewendet.

Die Haftvermittler werden beispielsweise in Mengen von 0,1 bis 10 g/m$^2$, zweckmässig von 0,3 bis 6 g/m$^2$ und bevorzugt von 0,8 bis 2g/m$^2$ angewendet.

Ein weiteres typisches Beispiel eines Verbundlaminates nach vorliegender Erfindung, enthält von aussen nach innen folgende Schichten

gegebenenfalls eine Siegelschicht a′)

eine Folie c′), wie vorstehend unter c) beschrieben,

eine Folie b′), wie vorstehend unter b) beschrieben,

eine Sperrschicht d′), gemäss vorstehend beschriebenem d),

und

eine Siegelschicht e′), wie vorstehend unter e) beschrieben.

Ein anderes typisches Beispiel eines Verbundlaminates nach vorliegender Erfindung enthält von aussen nach innen folgende Schichten

gegebenenfalls eine Siegelschicht a″),

eine Folie b″), wie vorstehend unter b) beschrieben, eine Sperrschicht d″) gemäss vorstehend beschriebenem d)

eine Folie b″), wie vorstehend unter b) beschrieben, und

eine Siegelschicht e″), wie vorstehend unter e) beschrieben.

Die Verbundlaminate nach vorliegender Erfindung können innen oder innen und aussen eine Siegelschicht z.B. mit a), a′) oder a″) bezeichnet, aufweisen.

Mit "innen" ist die Seite des Verbundlaminates gemeint, die bei einer Anwendung des Verbundlaminates zur Herstellung eines Behältnisses die Behälterinnenseite darstellt, während "aussen" die entsprechende Behälteraussenseite darstellt.

Die Siegelschichten sind an sich bekannt, und können beispielsweise LLDPE, LDPE, MDPE, HDPE, Polypropylen, Polyethylenterephthalat und Heissiegellacke enthalten oder daraus bestehen und können beispielsweise eine Dicke im Bereich vom 1 bis 100 µm aufweisen.

Die Verbundlaminate nach vorliegender Erfindung können durch Beschichten, Coextrusionsbeschichten, Kaschieren, Gegenkaschieren oder Heisskalandrieren hergestellt werden.

Vorliegende Erfindung betrifft auch die Verwendung von flexiblen Verbundlaminaten als Verpackungsmaterial. Beispiele für die Verwendung sind Verpackungsmaterialien, wie Beutel, Sachets oder Einwickler, beispielsweise für Nahrungsmittel für Mensch und Tier, für Pharmazentika und für technische Materialien.

Beispiele

1. (Vergleich) Ein flexibles Verbundlaminat wird durch Kaschieren einer Polyethylenterephthalat-Folie von 12 µm Dicke mittels eines Kaschierklebers auf eine 9 µm Dicke Aluminiumfolie (99,6% reines Aluminium) hergestellt. Die Polyethylenterephthalatfolie bildet die Aussenseite. Die Innenseite des Aluminiums wird mit einem LLDPE/L-MDPE-Coextrudat einer Dicke von 70 µm durch Gegenkaschieren beschichtet.

2. Ein flexibles Verbundlaminat nach Beispiel 1 wird auf der Aussenseite, d.h. auf der PolyethylenterphthalatFolie zusätzlich mit einer Folie eines thermoplastischen Urethans einer Dicke von 50 µm und einer Shore-A-Härte von 75 kaschiert.

3. Muster von Verbundlaminaten nach Beispielen 1 und 2 werden mit dem GELBO-Testgerät nach ASTM F 392, Condition E, 1000 Faltungen unterworfen. Anschliessend werden die Versuchsmuster auf die Sauerstoff-Durchlässigkeit mit dem Ox-Tran-Gerät nach DIN 53370 geprüft.

## Messresultate

| Muster gemäss Beispiel | Sauerstoff-Durchlässigkeit |
|---|---|
| 1 | 150 ccm/m$^2$/d |
| 2 | 0,9 ccm/m$^2$/d |

Das Messresultat zeigt, dass die Sperrschicht, demnach die Aluminium-Folie und die PET-Folie, im Muster nach Beispiel 1 beschädigt worden ist, während das erfindungsgemässe Muster nach beispiel 2 noch intakt ist.

**Patentansprüche**

1. Mehrschichtiges flexibles Verbundlaminat mit wenigstens einer Sperrschicht gegen Wasserdampf und Gase und beidseitig der Sperrschicht oder der Sperrschichten je einer Kunststoffschicht,
   dadurch gekennzeichnet,
   dass die Sperrschicht bzw. Sperrschichten eine Metall-Folie, eine Keramik-Schicht oder eine metallisierte Schicht darstellen und wenigstens eine der beidseitig der Sperrschicht bzw. Sperrschichten befindlichen Kunststoffschichten eine Schicht eines thermoplastischen Urethans enthalten oder daraus besteht.

2. Mehrschichtiges flexibles Verbundlaminat gemäss Anspruch 1, dadurch gekennzeichnet, dass es eine Sperrschicht und einseitig der Sperrschicht eine Schicht eines thermoplastischen Urethans enthält.

3. Mehrschichtiges flexibles Verbundlaminat gemäss Anspruch 1, dadurch gekennzeichnet, dass es beidseitig der Sperrschicht je eine Schicht eines thermoplastischen Urethans enthält.

4. Mehrschichtiges flexibles Verbundlaminat gemäss Anspruch 1, dadurch gekennzeichnet, dass es an einer oder beiden Aussenflächen eine Siegelschicht oder eine siegelbare Schicht aufweist.

5. Mehrschichtiges flexibles Verbundlaminat gemäss Anspruch 1, dadurch gekennzeichnet, das Verbundlaminat von aussen nach innen enthält:
   eine Folie b) eines thermoplastischen Polyurethans mit einer Dicke im Bereich von 20 bis 50 μm,
   eine Folie oder einen Folienverbund c) aus einem Polyester, einem Polyamid und/oder einem Polyolefin, mit einer Dicke in Bereich von 10 bis 20 μm,
   eine Sperrschicht d) aus einer Aluminiumfolie einer Dicke im Bereich von 8 bis 12 μm oder eine Kunststofffolie die wenigstens einseitig mit einer keramischen Beschichtung oder einer metallischen Schicht versehen ist,
   eine Siegelschicht e) in einer Dicke im Bereich von 1 bis 100 μm.

6. Mehrschichtiges flexibles Verbundlaminat gemäss Anspruch 1, dadurch gekennzeichnet, das Verbundlaminat von aussen nach innen enthält:
   eine Folie oder einen Folienverbund c) aus einem Polyester, einem Polyamid und/oder einem Polyolefin mit einer Dicke im Bereich von 10 bis 20 μm,
   eine Folie b) eines thermoplastischen Polyurethans mit einer Dicke im Bereich von 20 bis 50 μm,
   eine Sperrschicht d) aus einer Aluminiumfolie einer Dicke im Bereich von 8 bis 12 μm oder eine Kunststofffolie die wenigstens einseitig mit einer keramischen Beschichtung oder einer metallischen Schicht versehen ist, und
   eine Siegelschicht e) in einer Dicke im Bereich von 1 bis 100 μm.

7. Mehrschichtiges flexibles Verbundlaminat gemäss Anspruch 1, dadurch gekennzeichnet, das Verbundlaminat von aussen nach innen enthält:

eine Folie b) eines thermoplastischen Polyurethans mit einer Dicke im Bereich von 20 bis 50 μm,
eine Sperrschicht d) aus einer Aluminiumfolie einer Dicke im Bereich von 8 bis 12 μm oder
eine Kunststofffolie die wenigstens einseitig mit einer keramischen Beschichtung oder einer metallischen Schicht versehen ist,
eine Folie b) eines thermoplastischen Polyurethans mit einer Dicke im Bereich von 20 bis 50 μm und
eine Siegelschicht e) in einer Dicke im Bereich von 1 bis 100 μm.

8. Mehrschichtiges flexibles Verbundlaminat gemäss einem der Ansprüche 5 bis 7, dadurch gekennzeichnet, das Verbundlaminat aussen a) eine Siegelschicht enthält.

9. Verwendung des mehrschichtigen flexiblen Verbundlaminates gemäss Anspruch 1 als Verpackungsmaterial.

Europäisches
Patentamt

# EUROPÄISCHER RECHERCHENBERICHT

Nummer der Anmeldung

EP    91 81 0798

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 117 509 (INTERMEDICAT GMBH) | 1,4,7,9 | B32B27/40 |
| A | * das ganze Dokument * | 2,3,8 | B65D65/40 |
| | --- | | |
| X | DE-A-3 300 411 (TOYO INK MANUFACTURING CO.) | 1,2,9 | |
| | * das ganze Dokument * | | |
| | --- | | |
| X | EP-A-0 060 473 (ALUMINIUMWERKE A.-G. ROHRSCHACH) | 1,2,9 | |
| A | * das ganze Dokument * | 4-6 | |
| | ----- | | |

RECHERCHIERTE
SACHGEBIETE (Int. Cl.5)

B32B

Der vorliegende Recherchenbericht wurde für alle Patentansprüche erstellt

| Recherchenort | Abschlußdatum der Recherche | Prüfer |
|---|---|---|
| DEN HAAG | 19 DEZEMBER 1991 | DERZ T. |

EPO FORM 1503 03.82 (P0403)